(19) Europäisches Patentamt
European Patent Office
Office européen des brevets

(11) **EP 4 512 252 A1**

(12) **EUROPEAN PATENT APPLICATION**

(43) Date of publication:
**26.02.2025 Bulletin 2025/09**

(21) Application number: **23192448.1**

(22) Date of filing: **21.08.2023**

(51) International Patent Classification (IPC):
*A23L 3/48* (2006.01)   *A23L 5/10* (2016.01)
*A23L 19/00* (2016.01)   *A23L 19/15* (2016.01)
*A23L 19/18* (2016.01)

(52) Cooperative Patent Classification (CPC):
**A23B 2/94; A23L 5/11; A23L 19/01; A23L 19/15; A23L 19/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Duynie Holding B.V.**
**2407 AJ Alphen aan den Rijn (NL)**

(72) Inventors:
• **LOMMERS, Marcel**
**2407 AJ Alphen aan den Rijn (NL)**
• **VAN DEN ELZEN, JOOST**
**2407 AJ Alphen aan den Rijn (NL)**
• **WESSELS, Myrthe**
**2407 AJ Alphen aan den Rijn (NL)**

(74) Representative: **Arnold & Siedsma**
**Bezuidenhoutseweg 57**
**2594 AC The Hague (NL)**

(54) **POTATO STARCH COMPOSITION**

(57)   The invention pertains to potato starch composition comprising at least 1 wt% fat, based on the total weight of the potato starch composition, and starch which is at least 60% gelatinized, and the composition not being rancid.

EP 4 512 252 A1

**Description**

The present invention relates to potato starch compositions.

Potato starch has been long known and commercially available in a wide variety of grades. Many potato starch sources are quite difficult to process to a commercially viable grade. Pre-fried or fried potato starch-containing food products generally contain fats, which upon processing have the propensity to oxidize, which renders the processed food product to be rancid. There is a need to process such potato starch-containing food products without fat oxidation.

The objective of the present invention is to provide a novel potato starch composition.

The invention pertains to a potato starch composition comprising at least 1 wt% fat, based on the total dry weight of the potato starch composition, and starch which is at least 60% gelatinized, and the composition not being rancid. The potato starch composition of the invention can be obtained from pre-fried or fried potato starch-containing food products, like potato fries or potato-based crisps. In particular, from potato starch-containing food products that are not in accordance with specification (so-called "off-spec"), e.g. pre-fried potato fries which are too short, too thin, too thick and/or too brown, a potato starch composition can be prepared which can be used in food products (again). Pre-frying or frying is generally conducted at temperatures where the starch particles (or starch granules) are damaged and the potato starch is predominantly gelatinized. With "gelatinization" or "gelatinized" reference is made to the phenomenon occurring when starch is exposed to water and heat in which starch granules primarily absorb water, swell and eventually burst out to form a gel. The gelatinization of starch enables the starch of the invention to swell in cold water, also called cold water swelling (CWS). The water holding capacity of the inventive composition is generally improved compared to conventional starches such as potato flakes. Also the viscosity of suspensions of the inventive composition is generally higher than the viscosity observed for conventional starches such as potato flakes. Pre-fried or fried potato food products generally have a higher fat content than raw or boiled potato (i.e. 0.1-0.5 g/100 g potatoes). The inventive composition generally has a higher fat content than conventional potato starch compositions. Without being bound by theory, the gelatinized potato starch comprises (free) amylose which can form complexes with fatty acid or monoglycerides to form a starch-lipid complex (also called V complex). The starch-lipid complex generally prevents the oxidation of the fatty acids present in the composition and hence prevents the formation of off-flavours and consequently of a rancid taste and/or smell. Moreover, the presence of the starch-lipid complex may render the inventive composition to be more stable over a longer period of time. Additionally or alternatively, it is believed that the glassy amylopectin is capable of holding fat in particular diglycerides and triglycerides. This in turn also allows the inventive composition to have a higher fat uptake than conventional potato starches such as potato flakes.

The inventive potato starch composition is not rancid. By "rancid" is meant that the oxidation of the unsaturated fatty acids to metabolites and off-flavours has taken place to such an extent that the composition has a distinctively rancid smell and/or taste. Typically, rancidity is observed when the peroxide value is above 30 mEq $O_2$/ kg fat (also referred to as "30 meq/kg"). The inventors have found that this rancidity can be avoided when the appropriate drying conditions are chosen (vide supra). When the potato starch is rancid it cannot be suitably used in food products.

In an embodiment, the potato starch composition has a peroxide value of at most 30 meq/kg. Preferably, the potato starch composition has a peroxide value of at most 20 meq/kg, more preferably at most 10 meq/kg and most preferably at most 5 meq/kg, and preferably at least 0.1 meq/kg, more preferably at least 0.2 meq/kg and most preferably at least 0.5 meq/kg. The peroxide value can be determined using any suitable method in the art. An example of such method is ISO 3960:2017.

Preferably, the potato starch composition comprises at most 2 ppm hexanal, based on the dry weight of the potato starch composition, more preferably at most 1.5 ppm, even more preferably at most 1.2 ppm, even more preferably at most 1 ppm, even more preferably at most 900 ppb, even more preferably at most 800 ppb, even more preferably at most 700 ppb, even more preferably at most 600 ppb, such as at most 500 ppb, at most 450 ppb, at most 400 ppb, at most 350 ppb or at most 300 ppb. Hexanal is considered a marker for the fat oxidation. The concentration of hexanal can be determined using Gas chromatography-mass spectrometry with solid phase microextraction (GC-SPME-MS).

In one embodiment, the potato starch composition is cold water swelling (CWS). With "cold water swelling" is meant that the potato starch composition will absorb water at room temperature. The cold water swelling property can be measured using any suitable method. A suitable example is the determination of the water holding capacity which can be determined using the method of AACC 56-30.01.

In one embodiment of the invention, the potato starch composition has a water holding capacity of at least 3 ml/g. The water holding capacity of the inventive composition is generally higher than observed for conventional potato flakes and gelatinized potato starch. Preferably, the potato starch composition has a water holding capacity of at least 3.5 ml/g, more preferably a water holding capacity of at least 4 ml/g, even more preferably a water holding capacity of at least 4.5 ml/g, even more preferably a water holding capacity of at least 5 ml/g and most preferably a water holding capacity of at least 5.5 ml/g, and preferably a water holding capacity of at most 15 ml/g, more preferably a water holding capacity of at most 10 ml/g and most preferably a water holding capacity of at most 8 ml/g. The water holding capacity can be measured using any suitable method. Preferably, the method used to determine the water holding capacity is AACC 56-30.01.

In one embodiment of the invention, the potato starch composition has an oil holding capacity of at least 1.5 ml/g. The oil holding capacity of the inventive composition is generally higher than observed for conventional potato flakes and gelatinized potato starch. Preferably, the potato starch composition has an oil holding capacity of at least 1.8 ml/g, more preferably an oil holding capacity of at least 2 ml/g, even more preferably an oil holding capacity of at least 2.2 ml/g, even more preferably an oil holding capacity of at least 2.4 ml/g and most preferably an oil holding capacity of at least 2.5 ml/g, and preferably an oil holding capacity of at most 10 ml/g, more preferably an oil holding capacity of at most 8 ml/g and most preferably an oil holding capacity of at most 5 ml/g. The oil holding capacity can be determined using any suitable method known in the art. An example of such a method is described in Dongowski and Ehwald (1999; doi: 10.1021/bp990014c).

In another embodiment, the potato starch composition has a Brookfield viscosity of at least 1,000 mPa.s at 20 °C (Brookfield Viscometer DV2T, 40 rpm, spindle RV 3, after 30 minutes) in an aqueous solution containing 10 wt% of the potato starch composition. Preferably, the Brookfield viscosity is at least 1,500 mPa.s, more preferably at least 1,700 mPa.s and most preferably at least 1,900 mPa.s, and preferably at most 5,000 mPa.s, more preferably at most 4,000 mPa.s and most preferably at most 3,000 mPa.s.

In one embodiment, the potato starch composition of the invention originates from a (pre)fried potato starch-containing food product. Examples of such potato starch-containing food products include pre-fried and fried potato fries which may contain a batter, pre-fried or fried rösti and potato crisps. Preferably, the pre-frying or frying is performed in a frying oil at temperatures between 140 °C and 190 °C. Particularly suitable for the inventive composition is starch originating from a side stream of pre-fried or fried potato fries. This side stream includes potato fries which are not in accordance with set specifications, e.g. the potato fries may be too short, too thin, too thick and/or too brown.

The inventive potato starch composition comprises at least 1 wt% fat. The amount of fat is higher than conventionally contained in potatoes. During the frying process fat is incorporated into the (pre)fried potato starch-containing food product. The fat can be any fat known in the art, and includes free fatty acids, monoglycerides, diglycerides, triglycerides, phospholipids and any other lipid originating from plants, nuts and/or fruits. It is believed that the free fatty acids and/or the monoglycerides are capable of forming amylose-lipid complexes, and the di- and triglycerides may interact with the amylopectin. Additionally or alternatively, the diglycerides and triglycerides may interact with the amylopectin present in the inventive composition. Preferably, the inventive starch composition comprises at least 2 wt% fat, more preferably at least 3 wt% fat, even more preferably at least 4 wt% fat and most preferably at least 5 wt% fat, and preferably at most 30 wt% fat, more preferably at most 25 wt% fat and most preferably at most 20 wt% fat, based on the total dry weight of the potato starch composition. The total dry weight is defined as the total weight of the potato starch composition without water. The amount of fat can be determined with methods known in the art including organic solvent extraction. An example of such a technique is the ISO 6492 method.

In one embodiment, the inventive potato starch composition comprises at least 20 wt% starch, more preferably at least 30 wt% starch, even more preferably at least 40 wt% starch and most preferably at least 50 wt% starch, and preferably at most 99 wt% starch, more preferably at most 95 wt% starch, even more preferably at most 90 wt% starch and most preferably at most 80 wt% starch, based on the total dry weight of the potato starch composition. The amount of starch can be determined using any suitable method known in the art. Examples of a suitable method include spectrophotometric methods such as the method of NEN-EN-ISO 15914.

The potato starch composition of the invention comprises starch which is at least 60% gelatinized. Preferably, the inventive composition comprises starch which is at least 70% gelatinized, more preferably at least 80% gelatinized and most preferably at least 90% gelatinized, and preferably at most 100% gelatinized, more preferably at most 99% gelatinized and most preferably at most 95% gelatinized. The degree of gelatinization can be determined using any suitable method known in the art. Examples of suitable methods include light microscopy and electron microscopy.

In one embodiment, the potato starch composition comprises at least 30 wt% of starch having a molecular weight of at least 40 kDa. Preferably, the potato starch composition comprises at least 35 wt% of starch having a molecular weight of at least 40 kDa, more preferably at least 40 wt% of starch having a molecular weight of at least 40 kDa and most preferably at least 45 wt% of starch having a molecular weight of at least 40 kDa, and preferably at most 80 wt% of starch having a molecular weight of at least 40 kDa, more preferably at most 70 wt% of starch having a molecular weight of at least 40 kDa and most preferably at most 60 wt% of starch having a molecular weight of at least 40 kDa. The molecular weight distribution of the starch can be determined using conventional analytical techniques, e.g. based on size exclusion chromatography. A preferred method is a method based on Phenomenex POLYSEP.

In one embodiment, the potato starch composition comprises at least 10 wt% of starch having a molecular weight of at most 3 kDa. Preferably, the potato starch composition comprises at least 20 wt% of starch having a molecular weight of at most 3 kDa, more preferably at least 30 wt% of starch having a molecular weight of at most 3 kDa and most preferably at least 40 wt% of starch having a molecular weight of at most 3 kDa, and preferably at most 80 wt% of starch having a molecular weight of at most 3 kDa, more preferably at most 70 wt% of starch having a molecular weight of at most 3 kDa, even more preferably at most 60 wt% of starch having a molecular weight of at most 3 kDa and most preferably at most 55 wt% of starch having a molecular weight of at most 3 kDa. The molecular weight distribution of the starch can be determined using conventional analytical techniques, e.g. based on size exclusion chromatography. A preferred method is a method based on Phenomenex POLYSEP.

In one embodiment, the inventive potato starch composition comprises at most 10 wt% water, based on the total weight of the potato starch composition. Preferably, the inventive potato starch composition comprises at most 9 wt% water, more preferably at most 8 wt% water, even more preferably at most 6 wt% water and most preferably at most 5 wt% water, and preferably at least 0.1 wt% water, more preferably at least 0.2 wt% water, even more preferably at least 0.5 wt% water and most preferably at least 1 wt% water, based on the total weight of the potato starch composition.

In one embodiment, the inventive potato starch composition comprises at most 5 wt% monosaccharides, based on the total dry weight of the potato starch composition. The monosaccharides can be any monosaccharide known in the art. Preferably, the monosaccharide is glucose or fructose. Preferably, the inventive potato starch composition comprises at most 3 wt% monosaccharides, more preferably at most 2 wt% monosaccharides, even more preferably at most 1.5 wt% monosaccharides and most preferably at most 1 wt% monosaccharides, and preferably at least 0.01 wt% monosaccharides, more preferably at least 0.05 wt% monosaccharides, even more preferably at least 0.1 wt% monosaccharides and most preferably at least 0.2 wt% monosaccharides, based on the total dry weight of the potato starch composition. The amount of monosaccharide can be determined with methods known in the art. Examples of such methods include refractometry, specific gravity, high performance anion exclusion chromatography and infrared absorption techniques.

In a further embodiment, the potato starch composition of the invention comprises at most 150 ppm acrylamide. Preferably, the inventive potato starch composition comprises at most 125 ppm acrylamide, more preferably at most 100 ppm acrylamide, even more preferably at most 75 ppm acrylamide and most preferably at most 50 ppm acrylamide, and preferably at least 0.1 ppm acrylamide, more preferably at least 1 ppm acrylamide and most preferably at least 5 ppm acrylamide. The acrylamide content can be determined using any suitable method. An example of such a method is LC-MS. Preferably, acrylamide is determined using NEN-EN 16618.

In one embodiment, the inventive potato starch composition comprises at least 1 wt% protein, based on the total dry weight of the potato starch composition. Preferably, the inventive potato starch composition comprises at least 2 wt% protein, more preferably at least 5 wt% protein, even more preferably at least 10 wt% protein and most preferably at least 15 wt% protein, and preferably at most 40 wt% protein, more preferably at most 30 wt% protein, even more preferably at most 25 wt% protein and most preferably at most 20 wt% protein, based on the total dry weight of the potato starch composition. The protein can be added to the inventive composition or may be present in the potato starch-containing food product, e.g. protein may be present in the batter used to render the potato fries more crispy. Various methods have been described in literature to determine the protein content. For the purposes of this application, the Kjeldahl method is used to determine the nitrogen content, which is then converted to protein content. The Kjeldahl is well established and well known to the person skilled in the art. In this application the Kjeldahl method is performed by hydrolyzing a sample using $H_2SO_4$ at 420°C for 2 hours, during which the proteins will be converted to ammonia. The generated ammonia is distilled off and the amount of nitrogen is measured by titration. The amount of protein is calculated by multiplying the nitrogen content by the conversion factor of 6.25 (nitrogen to protein factor).

In one embodiment, the potato starch composition comprises an additive. The additive can be any additive known in the art. Such additives include other (modified) starch, (modified) cellulose, binders, (dietary) fibers, pigments, (inorganic) fillers, raising agents, flavouring agents, anti-oxidants, preservatives, sugars and colouring agents.

In one embodiment of the invention, the potato starch composition comprises at least 1 wt% of the additive. Preferably, the inventive composition comprises at least 2 wt% additive, more preferably at least 5 wt% additive, even more preferably at least 10 wt% additive and most preferably at least 15 wt% additive, and preferably at most 60 wt% additive, more preferably at most 50 wt% additive and most preferably at most 40 wt% additive, based on the total dry weight of the potato starch composition.

The amounts of starch, fat, water, additives and any other components add up to 100% by weight of the potato starch composition.

The invention further pertains to a food product comprising the potato starch composition of the invention. The food product can be any food product known in the art wherein the inventive potato starch composition can be used. Examples of such food products include meat substitutes or alternatives, fish substitutes or alternatives, breakfast cereals, cereal bars, pastry, snacks and spreads. Snacks are preferably chosen from the group consisting of plant-based meat snacks, vegan meat sticks, pizza bites and vegan protein bites.

In another embodiment, the food product is a vegetarian or vegan food product, preferably a vegetarian or vegan meat substitute or alternative, fish substitute or alternative, breakfast cereal, cereal bar, pastry, snack or spread. In a preferred embodiment, the food product does not comprise animal-derived ingredients.

In one embodiment of the invention, the food product is a burger, preferably a vegetarian or vegan burger.

In one embodiment, the food product can be any potato-based products. Examples of such potato-based products include French fries, rösti, crisps and other (pre)fried potato food products. The inventive composition can also be used in batter compositions for e.g. French fries.

In one embodiment, the food product can be a meat-based product. Examples of such meat-based food products includes meat balls, Wiener schnitzels, and meat-based snacks. The inventive composition can also be used in coating compositions for e.g. Wiener schnitzels. In a further embodiment, the inventive composition is used in combination with animal-based products like (cow) milk and (chicken) eggs.

The food product can be in any form known in the art. Examples include liquids, such as dispersions, creams, emulsions and solutions, and solids, such as granules, flakes, foams, gels or powders.

In one embodiment of the invention, the food product comprises at least 1 wt% of the potato starch composition. Preferably, the inventive food product comprises at least 2 wt% potato starch composition, more preferably at least 5 wt% potato starch composition, even more preferably at least 10 wt% potato starch composition and most preferably at least 15 wt% potato starch composition, and preferably at most 99 wt% potato starch composition, more preferably at most 90 wt% potato starch composition and most preferably at most 80 wt% potato starch composition, based on the total weight of the food product.

In one embodiment, the food product comprises a food-grade additive. Such a food-grade additive can be any food-grade additive known in the art. Examples of such food-grade additives include flavouring agents, colouring agents, preservatives, proteins, liquids such as water, anti-oxidants and (dietary) fibers.

In one embodiment of the invention, the food product comprises at least 1 wt% of the food-grade additive. Preferably, the inventive food product comprises at least 2 wt% food-grade additive, more preferably at least 5 wt% food-grade additive, even more preferably at least 10 wt% food-grade additive and most preferably at least 15 wt% food-grade additive, and preferably at most 99 wt% food-grade additive, more preferably at most 90 wt% food-grade additive and most preferably at most 80 wt% food-grade additive, based on the total weight of the food product.

The amounts of potato starch composition, food-grade additives and any other components add up to 100% by weight of the food product.

The invention further pertains to a process for preparing a potato starch composition comprising at least 1 wt% fat, based on the total weight of the potato starch composition, and starch which is at least 60% gelatinized, and the composition not being rancid comprising the steps of:

(a) providing a (pre)fried potato starch-containing food product;
(b) milling the food product to obtain a comminuted food product, or optionally adding water to the food product prior, during or after milling, to obtain a suspension;
(c) removing water from the comminuted food product or the suspension in a dryer at a temperature of the solids of at most 110 °C and a residence time of at most 3 minutes to obtain the potato starch composition; and
(d) optionally reducing the particle size of the potato starch composition.

With this process the potato starch composition of the invention can be prepared. The inventors have found that conventional drying methods such as fluidized bed drying with back mixing lead to a potato starch composition with a considerable off-flavour and/or rancidity, which is due to oxidation of (unsaturated) fats present in (pre)fried potato starch-containing food products. The process of the present invention, and in particular the use of dryers, leads to odorless and (storage) stable potato starch compositions. The inventive process is not complex and consumes generally less energy than conventional drying methods.

In step (a) a pre-fried and/or fried potato starch-containing food product is provided. The pre-fried or fried potato starch-containing food product can be any such food product known in the art. Further details of the potato starch-containing food products suitable for use in the process of the invention have been described above. Generally, the size of the food product is relatively large and milling or comminuting to reduce its size may be required.

In step (b) of the inventive method, the food product is milled. Milling can be performed in any milling device known in the art and suitable for reducing the size of the potato starch-containing food product. Suitable milling devices include a hammer mill, a roll mill, a pin mill or meat emulsifier.

In one embodiment, potato starch-containing food products can be added as such (without a size reduction) and without addition of water. In another embodiment, the food products are comminuted to form flakes or even ground product. The advantage of providing the food product as is to the water removal step (c) is that overall less water needs to be removed and the process is less complex, faster and economically more attractive. In a further embodiment, the milling of step (b) and the water removal of step (c) are combined in one device. An example of such a device is a spinning flash dryer.

In one embodiment, water can be added prior to milling to obtain a suspension or paste which is subsequently milled in a suitable milling device. Water can also be added during or after milling to obtain a suspension of ground potato starch-containing food product. Preferably, water is added prior to milling. The milling enables a more efficient water removal in step (c) of the inventive process.

In one embodiment, the weight ratio of water to potato starch-containing food product is at least 0.1, preferably at least 0.2, more preferably at least 0.5 and most preferably at least 1, and preferably at most 10, more preferably at most 8 and most preferably at most 5.

In another embodiment, the suspension comprises at least 1 wt% potato starch-containing food product, preferably at least 5 wt% potato starch-containing food product, more preferably at least 10 wt% potato starch-containing food product and most preferably at least 15 wt% potato starch-containing food product, and preferably at most 50 wt% potato starch-containing food product, more preferably at most 40 wt% potato starch-containing food product and most preferably at most 30 wt% potato starch-containing food product.

In one embodiment, the temperature of the suspension in step (b) is maintained at a temperature above room temperature. Preferably, the temperature of the suspension is at least 25°C, more preferably at least 30°C, more preferably at least 35°C and most preferably at least 40°C, and preferably at most 80°C, more preferably at most 75°C, and most preferably at most 70°C.

In one embodiment, the suspension can be mixed before entering step (c) of the inventive process.

In one embodiment of step (c) of the inventive process, water is removed from the suspension comprising ground potato starch-containing food product. In another embodiment of step (c), water is removed from the potato starch-containing food product and/or the comminuted food product. The water removal can be performed using any method known in the art. Preferably, the drying is performed in a relatively slow manner and/or under mild conditions. Typically, drying is performed in a dryer at a temperature of the solids of at most 110 °C and a residence time of at most 3 minutes. With "temperature of the solids" is meant the temperature of the potato starch composition during step (c) of the inventive process; the temperature of the air/gas flow entering the dryer is a different parameter. The term "residence time" has its conventional meaning and refers to the average time the solids are maintained in the dryer. When the temperature of the solids exceeds 110°C the oxidation rate of the fats increases considerably leading to a rancid potato starch composition (not in accordance with the invention). A residence time exceeding 3 minutes also generally leads to rancidity of the potato starch composition. The inventors have found that drying of pre-fried French fries at 70 °C for a prolonged time leads to a rancid potato starch composition. Examples of suitable drying methods include spray drying, freeze drying, spinning flash drying, fluidized bed drying and thin film drying such a using a drum dryer. Preferably, the drying method is spinning flash drying and thin film drying. Most preferred is spinning flash drying. As indicated above, spinning flash drying allows for the introduction of whole French fries while milling and drying is performed simultaneously. With spinning flash drying a dry powder of the inventive potato starch composition is obtained. With thin film drying, for example with a drum dryer, a thin glassy film of the potato starch composition is obtained which can be removed using a scraper or knife. Preferably, the obtained potato starch composition is subsequently milled or ground (as in step (d) of the inventive process) to obtain a dry powder of the inventive potato starch composition.

In one embodiment, the temperature of the solids is at most 110 °C, preferably at most 100 °C and most preferably at most 95°C, and preferably at least 50 °C, more preferably at least 60 °C and most preferably at least 70°C. The temperature of the solids can be measured in the powder immediately after the solids leave the dryer.

In one embodiment, the residence time is at most 3 minutes, preferably at most 2 minutes and most preferably at most 1 minute, and preferably at least 5 seconds, more preferably at least 10 seconds and most preferably at least 20 seconds.

In one embodiment, step (c) is performed in an oxygen-free environment. An example of such an environment is nitrogen.

In one embodiment, with the water removal step (c) an inventive potato starch composition comprising at most 10 wt% water, based on the total weight of the potato starch composition, is obtained. Preferably, the inventive potato starch composition comprises at most 9 wt% water, more preferably at most 8 wt% water, even more preferably at most 6 wt% water and most preferably at most 5 wt% water, and preferably at least 0.1 wt% water, more preferably at least 0.2 wt% water, even more preferably at least 0.5 wt% water and most preferably at least 1 wt% water, based on the total weight of the potato starch composition.

The potato starch composition obtained in step (c) can optionally be further reduced in size. Such size reduction can be obtained using any method known in the art. Examples of such methods includes a hammer mill, a roll mill, a pin mill or meat emulsifier. A skilled person can set the desired particle size distribution.

The invention is exemplified in the following Examples.

Examples

Example 1: potato starch composition

20 kg pre-fried potato fries were mashed and dried using a single drum dryer (2 rpm, 3 bar steam of 130°C, residence time about 30 seconds) to obtain 8 kg dried, yellow potato starch powder (Example 1).

The potato starch composition of Example 1 has a gelatinization degree of 99 wt% and a fat content of 13.3 wt% (on dry weight). The composition of Example 1 did not have a rancid smell or taste. The peroxide value of the composition of Example 1 was 4 meq/kg fat.

Various properties of the composition of Example 1 were determined and compared to commercially available potato flakes MPF-P 2 mm ex Rixona (Comparative Example A). The results are shown in the Table below.

Table 1 Comparison of various properties

| Property | Example 1 | Comparative Example A |
|---|---|---|
| Gelatinization (wt%) | 99 | 87 |
| Fat (wt%) | 13.3 | |
| Starch (wt%) | 60.2 | 72.3 |
| Monosaccharides (wt%) | 0.8 | |
| Peroxide value (meq/kg) | 4 | |
| Water (wt%) | 7.0 | 6.6 |
| Protein (wt%) | 6.8 | |
| Acrylamide (ppb) | 90 | 5 |
| WHC (ml/g) | 5.7 | 4.5 |
| OHC (ml/g) | 2.6 | 1.6 |
| Viscosity 2 min (mPa.s) | 1098 | 526 |
| Viscosity 30 min (mPa.s) | 1989 | 660 |
| MW > 40 kDa (%) | 50.4 | 27.9 |
| MW < 3 kDa (%) | 46.7 | 64.3 |

The gelatinization degree is determined using light microscopy. The fat content is determined using the ISO 6492 method. The starch content is determined using the method of NEN-EN-ISO 15914. The protein content is determined using the Kjeldahl method (as described above). The peroxide value is determined using the method of ISO 3960:20. The acrylamide content is determined using method according to NEN-EN 16618. The water holding capacity is determined according to standard method AACC 56-30.01.

*Monosaccharide content*

The monosaccharide content is determined using the method described by Sluiter et al (2008) in "NREL Lab: Determination of Structural Carbohydrates and Lignin in Biomass. Laboratory Analytical Procedure (LAP)".

*Equipment and Materials*

- Sample material
- Eluent: H2O, 0.25 M NaOH, and 0.65 M NaAc
- Sugar mixtures for calibration curve (rhamnose, arabinose, galactose, glucose, mannose, xylose, fructose, sucrose, galacturonic acid, and glucuronic acid)
- Internal standard (IS): Lactose monohydrate
- Weighing balance with an accuracy of 0.1 mg
- Standard laboratory glassware
- HPLC Dionex gradient system with Pulsed Amperometric Detection (PAD)
- HPLC column: Carbopac PA-1, 250 x 4.6 mm + guard (Dionex)
- 0.45 $\mu$m membrane filter
- Vortex mixer

*Procedure*

Weigh an appropriate aliquot of the sample material to the nearest 0.1 mg using a weighing balance. The dilution range should be chosen based on the expected monosaccharide content. Add 1 ml of the internal standard (IS) solution to the weighed sample aliquot. Top up the mixture with deionized water to reach the desired volume in volumetric flask. Homogenize the solution using a vortex mixer until well-mixed. If necessary, filter the solution through a 0.45 $\mu$m membrane filter to remove any particulate matter. Transfer the filtered solution to a suitable vial for analysis. Ensure that the concentrations of the monosaccharide components in the solution do not exceed those of the calibration solutions. If needed, further dilute the solution to bring it within the calibration range. Perform the monosaccharide measurement in duplicate to ensure accuracy and reproducibility.

*Calibration Curve*

Prepare a series of calibration solutions using different concentrations of the sugar mixture. The concentration range should typically be between 0.005% and 0.01%. Inject these calibration solutions into the HPLC system, and record the corresponding peak areas for each monosaccharide. Plot a linear calibration curve using the peak areas against the known concentrations of the sugar mixture. This calibration curve will be used to quantify the content of individual sugars in the sample.

*Oil binding capacity (OHC)*

The oil binding capacity is determined using the method described in Dongowski and Ehwald (1999: doi: 10.1021/bp990014c).

*Equipment and Materials:*

- Sample material (e.g., fiber, powder, or granules)
- Weighing balance with a accuracy of 0,1 mg
- Rapeseed oil
- Centrifuge
- Standard lab glassware
- Cotton tissue ( cotton swabs)
- Stopwatch or timer

*Procedure:*

First, begin by measuring the mass of the empty tube and documenting the weight as G1. Next, carefully measure 0.5 grams of the sample and place it into the tube, noting the weight as W. It's essential to conduct duplicate determinations for accuracy. Afterward, introduce 5 ml of rapeseed oil to the tube. Secure the tube with its cap and vigorously mix the contents using a vortex mixer for 1 minute, ensuring thorough integration of the sample and oil. Allow the mixture to sit at room temperature for a duration of 2 hours.

Proceed to centrifuge the mixture for 10 minutes at 3,000 RCF (relative centrifugal force). Once centrifugation is complete, decant the excess oil from the test tube. Place the tube upside down on absorbent paper for a period of time. Subsequently, use a cotton swab to precisely clean the inner surface of the test tube, eliminating any residual oil. Measure the weight of the tube and document this value as G2. Use the equation below to calculate the OBC.

$$OBC \left( \frac{g}{g} \right) = \frac{G1 + (G2 - G1) - (G1 + W)}{W}$$

The Brookfield viscosity is measured at 20°C using Brookfield Viscometer DV2T (40 rpm, spindle RV 3) after 2 minutes and 30 minutes.

The molecular weight distribution is measured using a method based on Phenomenex POLYSEP.

The potato starch composition of Example 1 was not rancid after 1.5 years of storage.

Example 2: potato starch composition

20 kg of pre-fried and frozen potato fries (from the same batch as used in Example 1) were dried using a spinning flash dryer (air flow of 250°C, residence time below 10 seconds) to obtain 8 kg dried, yellow, odourless potato starch powder (Example 2).

The properties of the potato starch composition of Example 2 are the same as observed for the potato starch composition of Example 1.

The potato starch composition of Example 2 was not rancid after 1.5 years of storage.

Comparative Example B: potato starch composition

1 kg of pre-fried potato fries were dried in an Alora food dryer (350W, 5 plates) at 70°C for 2 weeks to obtain a potato starch powder (Comparative Example B).

The potato starch composition of Comparative Example B has a water content of 7.9 wt% and a fat content of 10.7 wt% (on dry weight). The composition of Comparative Example B had a very rancid smell and taste. The peroxide value of the composition of Comparative Example B was 90 meq/kg fat.

Comparative Example C: potato starch composition

20 kg of pre-fried potato fries were dried in a fludized bed dryer with back mixing to obtain a potato starch powder (Comparative Example C).

The potato starch composition of Comparative Example C has a water content of 4.7 wt% and a fat content of 15.7 wt% (on dry weight). The composition of Comparative Example B had a rancid smell and taste. The peroxide value of the composition of Comparative Example C was 39 meq/kg fat.

Example 3: battered potato fries

11 mm potato fries from Fontane potatoes were pre-cooked and coated with a standard batter composition (41 wt% dry matter). Subsequently, the wet coated potato fries were coated with the potato starch powder of Example 1. The doubly coated potato fries were fried in sunflower oil at 175 °C for 60 seconds. The pre-fried potato fries were subsequently cooled and frozen.

The frozen potato fries were fried in sunflower oil at 175 °C for 3.5 minutes. The fried potato fries were uniformly yellow in colour and had a crispy outside layer. No off-flavours were smelled or tasted.

Example 4: Rösti

1000 gram potato pieces and 25 gram herbs were mixed with 50 grams of the potato starch of Example 1, and subsequently shaped in a standard rösti mold (for 45 grams). The rösti were fried in sunflower oil at 180 °C for 60 seconds. The pre-fried rösti were cooled and frozen.

The frozen rösti were fried in sunflower oil at 175 °C for 3.5 minutes. The fried rösti were uniformly yellow in colour and had a crispy outside layer. No off-flavours were smelled or tasted. The rösti exhibited a looser structure than conventional rösti.

**Claims**

1.    Potato starch composition comprising at least 1 wt% fat, based on the total weight of the potato starch composition, and starch which is at least 60% gelatinized, and the composition not being rancid.

2.    Composition according to claim 1 wherein the composition is cold water swelling.

3.    Composition according to any one of claims 1 and 2 wherein the composition originates from a (pre)fried potato starch-containing food product.

4.    Composition according to any one of the preceding claims having a water holding capacity of at least 4 ml/g, preferably at least 5 ml/g.

5.    Composition according to any one of the preceding claims having a peroxide value of at most 10 meq/kg, preferably at most 5 meq/kg.

6.    Composition according to any one of the preceding claims comprising at most 10 wt% water, based on the total weight of the potato starch composition.

7.    Composition according to any one of the preceding claims comprising at least 60 wt% starch, based on the total weight of the potato starch composition.

8.    Composition according to any one of the preceding claims comprising at most 5 wt% monosaccharide, preferably at most 1 wt% monosaccharide, based on the total weight of the potato starch composition.

9. A food product comprising the potato starch composition of any one of the preceding claims.

10. A process for preparing a potato starch composition comprising at least 1 wt% fat, based on the total weight of the potato starch composition, and starch which is at least 60% gelatinized and the composition not being rancid comprising the steps of:

> (a) providing a (pre)fried potato starch-containing food product;
> (b) milling the food product, and adding water to the food product prior, during or after milling to obtain a suspension;
> (c) removing water from the suspension in a dryer at a temperature of the solids of at most 110 °C and a residence time of at most 3 minutes to obtain the potato starch composition; and
> (d) optionally reducing the particle size of the potato starch composition.

Europäisches
Patentamt

European
Patent Office

Office européen
des brevets

# EUROPEAN SEARCH REPORT

Application Number

EP 23 19 2448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIFAI LUBNA ET AL: "In Vitro and In Vivo Evaluation of the Protective Potential of Moringa oleifera Against Dietary Acrylamide-induced Toxicity", THE OPEN MEDICINAL CHEMISTRY JOURNAL, vol. 14, no. 1, 30 July 2020 (2020-07-30), pages 26-34, XP093118403, NL ISSN: 1874-1045, DOI: 10.2174/1874104502014010026 Retrieved from the Internet: URL:https://openmedicinalchemistryjournal. com/contents/volumes/V14/TOMCJ-14-26/TOMCJ -14-26.pdf> * page 28, column 2, paragraph 4 - column 2, paragraph 1 * | 1-10 | INV. A23L3/48 A23L5/10 A23L19/00 A23L19/15 A23L19/18 |
| X | ADEDIPE OLUWATOSIN E. ET AL: "Development and Validation of a Near-Infrared Spectroscopy Method for the Prediction of Acrylamide Content in French-Fried Potato", JOURNAL OF AGRICULTURAL AND FOOD CHEMISTRY, vol. 64, no. 8, 22 February 2016 (2016-02-22), pages 1850-1860, XP093118489, US ISSN: 0021-8561, DOI: 10.1021/acs.jafc.5b04733 * page 1851, column 2, paragraph 2 * | 1-9 | TECHNICAL FIELDS SEARCHED (IPC)  A23L |

-/--

The present search report has been drawn up for all claims

| Place of search | Date of completion of the search | Examiner |
|---|---|---|
| The Hague | 12 January 2024 | Rooney, Kevin |

EPO FORM 1503 03.82 (P04C01)

Europäisches
Patentamt

European
Patent Office

Office européen
des brevets

# EUROPEAN SEARCH REPORT

**Application Number**

EP 23 19 2448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | XU FEN ET AL: "Physicochemical and Structural Characterization of Potato Starch with Different Degrees of Gelatinization", FOODS, vol. 10, no. 5, 17 May 2021 (2021-05-17), page 1104, XP093118381, CH ISSN: 2304-8158, DOI: 10.3390/foods10051104 * page 2 – page 3 * * page 5, paragraph 3 * | | |
| A | JP S52 66654 A (MEIJI SEIKA CO) 2 June 1977 (1977-06-02) * the whole document * | 1-10 | |
| A | Anon.: "Recuperacion de Almidon de la Elaboracion de Papas Fritas", , 25 March 2018 (2018-03-25), XP93118960, Retrieved from the Internet: URL:http://fibralm.com.ar/almidones/wp-content/uploads/2017/06/Recuperación-de-Almidon.pdf [retrieved on 2024-01-12] * the whole document * | 1-10 | **TECHNICAL FIELDS SEARCHED** (IPC) |

The present search report has been drawn up for all claims

| Place of search | Date of completion of the search | Examiner |
|---|---|---|
| The Hague | 12 January 2024 | Rooney, Kevin |

EPO FORM 1503 03.82 (P04C01)

**ANNEX TO THE EUROPEAN SEARCH REPORT
ON EUROPEAN PATENT APPLICATION NO.**

**EP 23 19 2448**

This annex lists the patent family members relating to the patent documents cited in  the above-mentioned European search report.
The members are as contained in the European Patent Office EDP file on
The European Patent Office is in no way liable for these particulars which are merely given for the purpose of information.

**12-01-2024**

| Patent document cited in search report | Publication date | Patent family member(s) | | Publication date |
|---|---|---|---|---|
| JP  S5266654      A | 02-06-1977 | JP | S5266654  A | 02-06-1977 |
| | | JP | S5328494  B2 | 15-08-1978 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SLUITER et al.** NREL Lab: Determination of Structural Carbohydrates and Lignin in Biomass. *Laboratory Analytical Procedure (LAP)*, 2008